# EUROPEAN PATENT SPECIFICATION

(11) **EP 2 687 457 B1**
(45) Date of publication and mention of the grant of the patent: **01.10.2014**
(21) Application number: 12177168.7
(22) Date of filing: 19.07.2012
(51) Int. Cl.: B65D 75/12, B65D 75/20, A23B 7/144, A23L 3/3409, B65D 81/28, A61L 2/20, A61L 9/015

(54) **Anti-mold packet**
Schimmelschutzverpackung
Paquet anti-mildiou

(43) Date of publication of application: 22.01.2014
(73) Proprietor: Yiu, Wen-Shi, Taichung City (TW)
(72) Inventor: Yiu, Wen-Shi, Taichung City (TW)
(74) Representative: 2K Patentanwälte Blasberg Kewitz & Reichel

(56) References cited:
- EP-A1- 0 967 159
- WO-A1-2008/046211
- TW-U- M 290 754

## Description

The present invention relates to an anti-mold article and particularly to a packet to hold an anti-mold volatile substance.

### BACKGROUND OF THE INVENTION

In damp and warm environments, such as Southeast Asia regions, how to prevent foods or leather goods from being moldy is an issue many people are trying to resolve. One of the conventional techniques is to dispose chemicals such as antiseptic, desiccant or deoxidizer in a container to prohibit or prevent mold from breeding. But used on foods the chemicals could produce ill effects on the health of human being, thus there are still rooms for improvement.

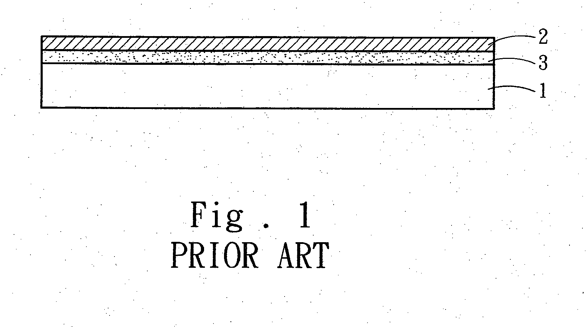

At present there are patches or tags adsorbing anti-mold essence on the market. Please refer to FIG. 1 for one of such goods. It generally is made in a sheet structure including a base sheet 1, an upper sheet 2 and an essence adsorption layer 3 sandwiched between the base sheet 1 and upper sheet 2. The essence adsorption layer 3 adsorbs an anti-mold essence and can release the essence from the edge in contact with the air. The base sheet 1 and upper sheet 2 also can release the essence depending on their structure and material. However, the essence adsorption layer 3 made in the sheet structure cannot contain too much essence. After used for a period of time, the anti-mold essence is exhausted through evaporation, and replacement is needed. Hence its usability is lower and cannot meet the requirement of longer use period.

Another conventional technique is disclosed in R.O.C. patent No. M290754 which includes a release paper and a paster bonded together through adhesive. The paster contains an anti-mold composition capable of volatilizing. When the release paper is peeled off, the paster can be bonded into a container with goods held inside. The anti-mold composition is released continuously for a preset period of time to prevent the goods from becoming moldy. The anti-mold composition consists of 30% of garlic oil, 5% of tea tannin, 40% of capsicum oil, 20% of mustard powder and 5% of citronella.

The garlic oil includes ingredients of sulfide, propylene sulfur, propylene cysteire, sulfur oxide, propylene isothiocyanate and the like that can provide deodorization and antibacterial effect. The tea tannin is generally called as polyphenol extracted from tea that also contains flavanols which can provide deodorization, antibacterial, antiseptic, anti-mold and antioxidation effect. The capsicum oil contains aromatic hydrocarbon which is antibacterial and can be volatilized to produce vapor to form a protective film to shield insects and also provide preservation effect. The mustard powder has a strong disinfection effect. The citronella mainly consists of 70-80% of citral and 20% of myrcene, and also includes other ingredients such as citronellal (C10H18O), geraniol (C10H18O), 1-borneol, 1,8-p-menthadien-5-ol and the like that also provide antibacterial and deodorization effect.

Document US-A-4802574 discloses an apparatus for storing and dispersing food preservatives. This apparatus can regulate the gas emission rate.

Bottle-contained anti-mold essence can last longer in use, but is prone to spill out to cause contamination. It also leaves a lot to be desired in terms of usability.

### SUMMARY OF THE INVENTION

The primary object of the present invention is to overcome the problem of the conventional technique that contains a smaller amount of anti-mold essence and has to be replaced frequently due to fast evaporation.

This problem is solved by an anti-mold packet according to claim 1. Further advantageous embodiments are the subject-matter of the dependent claims.

To achieve the foregoing object, the present invention provides an anti-mold packet that comprises a holding pouch and an anti-mold volatile substance. The holding pouch has an upper edge, a lower edge, a left edge and a right edge. The left edge and right edge are respectively bent and folded to form a housing space and a folded seam edge. The upper edge and lower edge are pressed and sealed. The folded seam edge is partially pressed and sealed to form a slit communicating with the exterior. The anti-mold volatile substance is held in the housing space.

By means of the structure set forth above, the holding pouch can hold the anti-mold volatile substance in a packet fashion, hence it can hold a greater amount of the anti-mold volatile substance. The slit of the folded seam edge can be controlled at a desired size to limit evaporation of the anti-mold volatile substance to adapt to different use environments, thus the release duration of the anti-mold volatile substance can be prolonged to provide an anti-mold packet used for a longer period of time to meet use requirements.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a cross section of a conventional technique.
FIG. 2 is a schematic view of the invention in a spread condition.
FIG. 3 is a schematic view of the invention in an assembled condition.
FIG. 4 is a schematic view of the invention in a use condition.
FIG. 5 is a schematic view of an embodiment of the invention.

### DETAILED DESCRIPTION OF THE PREFERRED EMBODIMENT

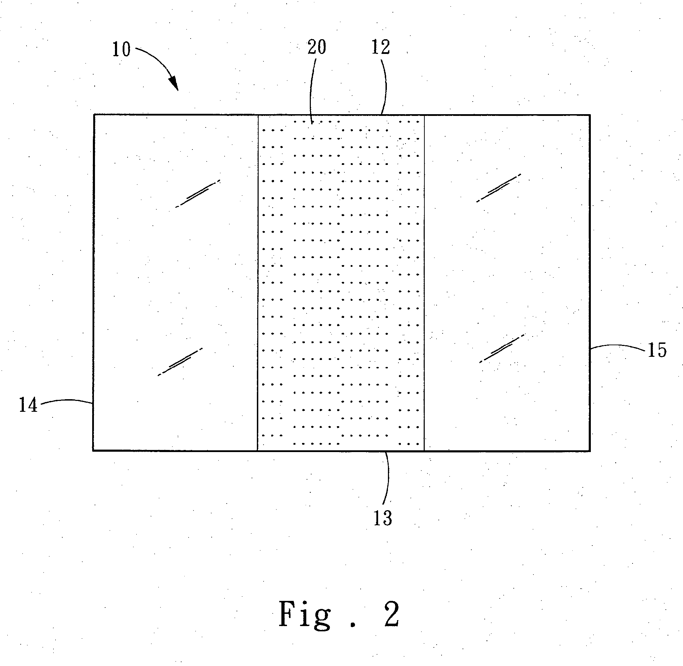

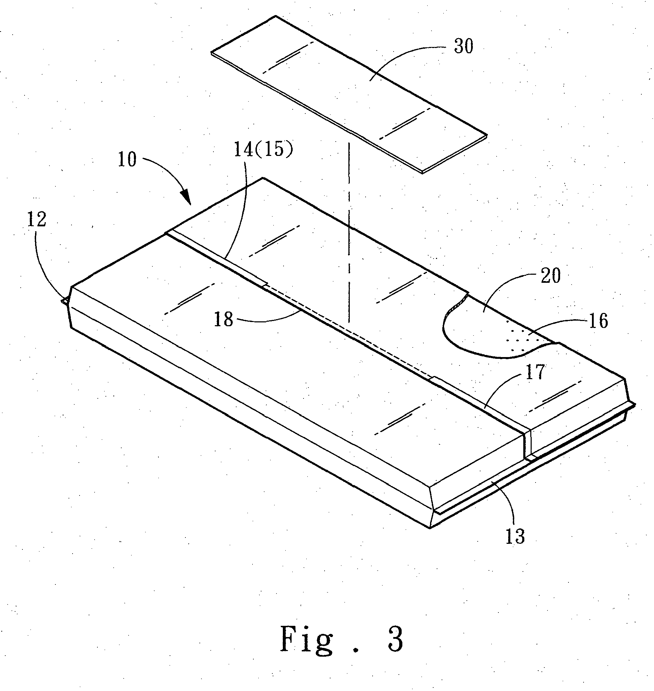

Please refer to FIGS. 2 and 3, the present invention aims to provide an anti-mold packet which comprises a holding pouch 10 and an anti-mold volatile substance 20. The holding pouch 10 has an upper edge 12, a lower edge 13, a left edge 14 and a right edge 15. The left edge 14 and right edge 15 are respectively bent and folded to form a housing space 16 and a folded seam edge 17. The upper edge 12 and lower edge 13 are pressed and sealed. The folded seam edge 17 is partially pressed and sealed to form a slit 18 communicating with the exterior. The slit 18 can be located at the center of the folded seam edge 17. The holding pouch 10 can be made of nylon or other environmental-friendly material, such as aluminum foil or the like.

The anti-mold volatile substance 20 is held in the housing space 16, or can be coated on the holding pouch 10 in a fixed location. The invention also can include a sealing patch 30 to cover the slit 18 and seal the housing space 16.

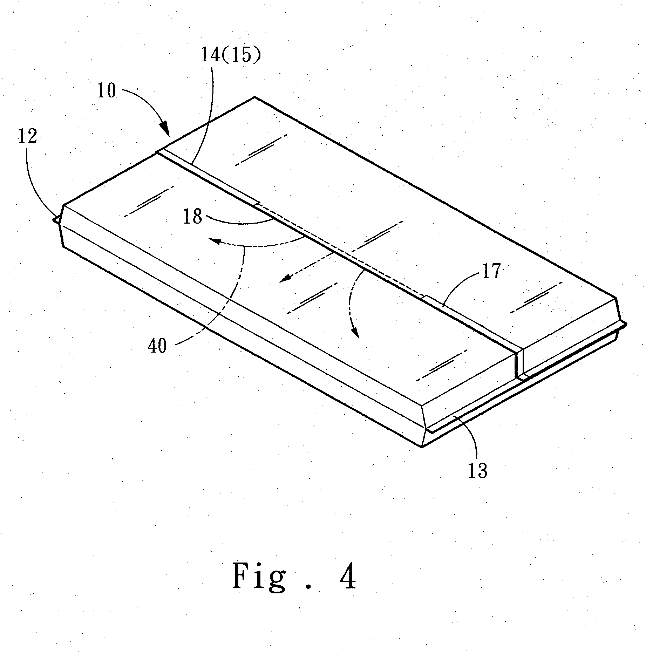

Also referring to FIG. 4, when in use, only if the sealing patch 30 is peeled off, the housing space 16 can communicate with the exterior through the slit 18, hence the anti-mold volatile substance 20 can slowly evaporate to become gas 40 and dissipate to achieve anti-mold effect. The width of the folded seam edge 17 can be changed according to actual requirements, and length of the slit 18 also can be changed as desired. In other words, the evaporation speed of the anti-mold volatile substance 20 can be controlled to meet requirements in different environments.

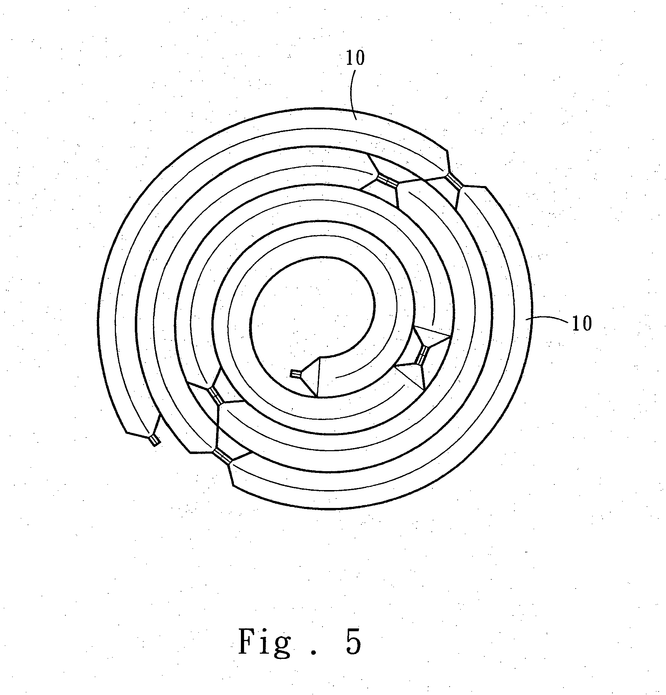

Please refer to FIG. 5, there are multiple holding pouches 10 clustered and wound in a roll film. When in use, the holding pouch 10 can be detached individually, thus can facilitate using and storage.

As a conclusion, compared with the conventional techniques, the invention provides features as follows:
1. The anti-mold volatile substance is held in the holding pouch in a packet fashion, hence the holding amount of the anti-mold volatile substance can be increased. Given a fixed evaporation speed for the anti-mold volatile substance, release duration of the anti-mold volatile substance also increases, thus the lifespan of the anti-mold packet is longer.
2. By changing the width of the folded seam edge and length of the slit, the evaporation speed of the anti-mold volatile substance can be controlled to meet different use requirements at different sites.
3. By holding the anti-mold essence through the holding pouch, the anti-mold essence can be prevented from spilling out to avoid the problem of contamination.

Embodiments of the invention are disclosed in the claims.

## Claims

1. An anti-mold packet, comprising:
a holding pouch (10) comprising an upper edge (12), a lower edge (13), a left edge (14) and a right edge (15), the left edge (14) and the right edge (15) being respectively bent and folded to form a housing space (16) and a folded seam edge (17), the upper edge (12) and the lower edge (13) being respectively pressed and sealed, the folded seam edge (17) being partially pressed and sealed to form a slit (18) communicating with an exterior; and
an anti-mold volatile substance (20) held in the housing space (16).

2. The anti-mold packet of claim 1 further including a sealing patch (30) covering and sealing the slit (18).

3. The anti-mold packet of claim 1 or 2, wherein the slit (18) is located at a center of the folded seam edge (17).

4. The anti-mold packet of any of the preceding claims, wherein the anti-mold volatile substance (20) is coated on the holding pouch (10).

5. The anti-mold packet of any of the preceding claims, wherein the holding pouch (10) is selectively made of nylon or aluminum foil.

6. The anti-mold packet of any of the preceding claims, wherein the holding pouch (10) includes multiple sets clustered and wound in a roll film.

## Patentansprüche

1. Schimmelschutzverpackung, umfassend:
eine Aufnahmetasche (10) mit einem oberen Rand (12), einem unteren Rand (13), einem linken Rand (14) und einem rechten Rand (15), wobei der linke Rand (14) und der rechte Rand (15) jeweils gebogen und gefaltet ist, um einen Aufnahmeraum (16) und einen gefalzten Saumrand (17) auszubilden, wobei der obere Rand (12) und der untere Rand (13) jeweils gedrückt und verschlossen ist, wobei gefalzte Saumrand (17) teilweise gedrückt und verschlossen, um einen Schlitz (18) auszubilden, die mit einem Außenraum in Verbindung steht; und
eine flüchtige Anti-Schimmel-Substanz (20), die in dem Aufnahmeraum (16) enthalten ist.

2. Schimmelschutzverpackung nach Anspruch 1, weiterhin umfassend einen Dichtstreifen (30), welcher den Schlitz (18) abdeckt und abdichtet.

3. Schimmelschutzverpackung nach Anspruch 1 oder 2, wobei der Schlitz (18) sich in der Mitte des gefalzten Saumrands (17) befindet.

4. Schimmelschutzverpackung nach einem der vorhergehenden Ansprüche, wobei die flüchtige Anti-Schimmel-Substanz (20) auf die Aufnahmetasche (10) beschichtet ist.

5. Schimmelschutzverpackung nach einem der vorhergehenden Ansprüche, wobei die Aufnahmetasche (10) wahlweise aus Nylon oder einer Aluminiumfolie besteht.

6. Schimmelschutzverpackung nach einem der vorhergehenden Ansprüche, wobei die Aufnahmetasche (10) mehrere Gruppen umfasst, die gebündelt und zu einer Rollschicht aufgerollt sind.

## Revendications

1. Un paquet anti-moisissures, comprenant :
une poche de retenue (10) comprenant un bord supérieur (12), un bord inférieur (13), un bord gauche (14) et un bord droit (15), le bord gauche (14) et le bord droit (15) étant respectivement plié et replié pour former un volume de confinement (16) et un bord de jonction de pliure (17), le bord supérieur (12) et le bord inférieur (13) étant respectivement pressés et scellés, le bord de jonction de pliure (17) étant partiellement pressé et scellé de manière à aménager une encoche (18) communicant avec l'extérieur ; et
une substance volatile anti-moisissure (20) retenue dans le volume de confinement (18).

2. Le paquet anti-moisissure de la revendication 1 comprenant en outre une pastille de scellement (30) couvrant et scellant l'encoche (18).

3. Le paquet anti-moisissure de la revendication 1 ou 2, dans lequel l'encoche (18) est disposé au centre du bord de jonction de pliure (17).

4. Le paquet anti-moisissure de l'une quelconque des revendications précédentes, dans lequel la substance volatile anti-moisissure (20) est couverte sur la poche de retenue (10).

5. Le paquet anti-moisissure de l'une quelconque des revendications précédentes, dans lequel la poche de retenue (10) est sélectivement réalisée à partir de nylon ou d'une feuille d'aluminium.

6. Le paquet anti-moisissure de l'une quelconque des revendications précédentes, dans lequel la poche de retenue (10) comporte plusieurs jeux en grappe et enroulées en un film.
